# EUROPÄISCHE PATENTANMELDUNG

(11) **EP 4 738 630 A1**
(43) Veröffentlichungstag der Anmeldung: **06.05.2026**
(21) Anmeldenummer: 25208509.7
(22) Anmeldetag: 14.10.2025
(51) Int. Cl.: H02G 1/12

(54) **VORRICHTUNG UND VERFAHREN ZUR KABELBEARBEITUNG**

(30) Priorität: 30.10.2024 DE 102024131718
(71) Anmelder: MD ELEKTRONIK GmbH, 84478 Waldkraiburg (DE)
(72) Erfinder: Schuster, Udo, 83374 Traunwalchen (DE)
(74) Vertreter: Winter, Brandl - Partnerschaft mbB

(57) **Zusammenfassung**

Offenbart sind eine Vorrichtung und ein Verfahren zur Schirmfolienentfernung und zur Entdrillung mehrerer Adern eines Endabschnitts eines Datenkabels, wobei die Vorrichtung eine Leitungsklemmung (2) aufweist, zwischen deren mindestens zwei in eine Einführstellung gestellte Haltebacken (12) der Endabschnitt entlang einer Längsachse (11) einführbar ist. Weiterhin ist eine Folienklemmung (3) vorgesehen, deren mindestens zwei Folienmesser (13) an verschiedenen Seiten der Längsachse (11) angeordnet sind, wobei zwischen den in eine Durchlassstellung gestellten Folienmessern (13) hindurch der Endabschnitt entlang der Längsachse (11) in die Leitungsklemmung (2) einführbar ist. Die Leitungsklemmung (2) und die Folienklemmung (3) sind über ein gemeinsames Schwenksystem (1) um die Längsachse (11) drehbar.

## Beschreibung

### Technisches Gebiet

Die vorliegende Offenbarung betrifft die Kabelkonfektionierung, insbesondere die Bearbeitung eines abgemantelten Endabschnitts eines zwei- oder mehradrigen verdrillten Datenkabels.

### Hintergrund der Offenbarung

Aus der Praxis sind Datenkabel bekannt, die zwei Adern aufweisen, wobei die beiden Adern um eine gedachte Mittelachse verdrillt sind (also einen Drall aufweisen mit einer in Längsrichtung der Mittelachse annähernd konstanten Schlaglänge), und wobei die beiden Adern innerhalb einer gemeinsamen, beide Adern umgebenden Schirmfolie (dünne Kunststoff-Folie mit metallischer Beschichtung, ca. 10 µm dick) angeordnet sind. Außerhalb der Schirmfolie kann ein Schirmgeflecht (zylindrisches Geflecht aus metallischen Litzen) angeordnet sein, wobei das Schirmgeflecht die Schirmfolie umgibt. Außerhalb der Schirmfolie (und ggf. außerhalb des Schirmgeflechts) ist radial außen ein im Wesentlichen zylindrischer Kabelmantel aus einem Kunststoff angeordnet.

Bei der Kabelkonfektionierung solcher zwei- oder mehradriger Datenkabel mit verdrillten Adern tritt daher die Forderung auf, sowohl die Schirmfolie als auch die Verdrillung an einem abgemantelten Endabschnitt zu beseitigen, um die Adern des Datenkabels mit einem Steckverbinder versehen zu können.

Aus dem Stand der Technik ist für solche zwei- oder mehradrigen Datenkabel bekannt, dass, wenn die Adern des Kabels verdrillt sind, die Verdrillung (der Drall) der Adern an einem abgemantelten Endabschnitt des Datenkabels (an dem der äußere Kabelmantel entfernt ist) beseitigt werden muss, um den Endabschnitt des Datenkabels weiter zu verarbeiten. An dem abgemantelten Endabschnitt sind der Kabelmantel aus Kunststoff sowie das ggf. vorhandenes Schirmgeflecht entfernt, wobei letzteres beispielsweise um 90° radial aufgestellt oder um 180° umgelegt (umgestülpt) ist. Damit liegt an dem Endabschnitt des Datenkabels die Schirmfolie frei. Auch diese freigelegte Schirmfolie ist für die weitere Bearbeitung der unter der Schirmfolie angeordneten, verdrillten Adern des Kabels zu beseitigen.

Es ergeben sich also die beiden Aufgaben, an dem abgemantelten und ggf. von dem Schirmgeflecht freigelegten Endabschnitt des Kabels
- die Schirmfolie zu entfernen, und
- den Drall (die Verdrillung) der Adern zu beseitigen.

### Stand der Technik

Die beiden Teilprozesse an dem abgemantelten und ggf. von dem Schirmgeflecht freigelegten Ende des Kabels, nämlich
- die Schirmfolie zu entfernen, und
- den Drall (die Verdrillung) der Adern zu beseitigen,
werden üblicherweise in zwei verschiedenen Bearbeitungsstationen durchgeführt, wobei die Reihenfolge unterschiedlich sein kann. Das macht einen Transfer der teilbearbeiteten Kabel von einer Bearbeitungsstation zu der anderen Bearbeitungsstation erforderlich, was Prozesszeit kostet.

US 3,853,156 A beschreibt eine Vorrichtung zur Bearbeitung eines zweiadrigen, verdrillten Kabels, wobei das Kabel in einem ersten Klemmenpaar eingespannt ist und ein zweites Klemmenpaar sowohl das Entdrillen als auch das Entfernen der Isolierung der jeweiligen Ader durchführt.

WO 2024/024368 A1 beschreibt eine Vorrichtung bzw. ein Verfahren, um einen verbliebenen Überstand einer zuvor entfernten Schirmfolie gegen die Kante des umgelegten Schirmgeflechts zu drücken. Dazu wird das zweiadrigen Kabel mit dem Schirmfolien-Überstand in zwei konturierte Haltebacken einer Klemmvorrichtung eingespannt, wobei die jeweilige Kontur auf die Ader abgestimmt ist, und der Schirmfolien-Überstand mit einer Rippe abschließend verschoben.

DE 10 2022 122 184 A1 beschreibt ein Verfahren zum Entdrillen und nachfolgenden Entfernen einer Schirmfolie für ein zweiadriges Kabel. Dabei wird der abgemantelte Endabschnitt zuerst in ein Elektrokabelspannfutter eingespannt und das Elektrokabelspannfutter mittels eines Aktuators so gedreht, dass das Kabel entdrillt wird. Dabei wird die Schirmfolie geweitet. Nachfolgend wird die geweitete Schirmfolie in (weitere) Backen eines Öffnungs- und Schließspannfutters eingespannt, in eine definierte Form gedrückt und abschließend die geformte Schirmfolie geschlitzt und entfernt.

### Kurzbeschreibung der Offenbarung

Aufgabe der vorliegenden Offenbarung ist es, eine Vorrichtung bzw. ein Verfahren zu schaffen, um beide Teilprozesse mit reduzierter Prozesszeit (Taktzeit) durchzuführen.

Diese Aufgabe wird in Hinblick auf die Vorrichtung mit der Merkmalskombination des Anspruchs 1 und im Hinblick auf das Verfahren mit der Merkmalskombination des Anspruchs 11 gelöst.

Die Vorrichtung gemäß der Offenbarung kann auch als Bearbeitungsstation bezeichnet werden und ist zur Konfektionierung eines Endabschnitts eines Datenkabels mit mindestens zwei Adern vorbereitet und eingerichtet. Die mit der Vorrichtung realisierbare Bearbeitung im Rahmen der Konfektionierung des Datenkabels umfasst ein Entdrillen des Endabschnitts und ein Entfernen einer Schirmfolie am Endabschnitt in einer einzigen Vorrichtung, so dass ein Transfer zwischen zwei beabstandeten Bearbeitungsstationen entfällt und Prozesszeit, insbesondere Transferzeit, eingespart werden kann. Die Vorrichtung gemäß der Offenbarung weist dazu eine Leitungsklemmung auf, zwischen deren mindestens zwei Haltebacken in einer Einführstellung der Endabschnitt entlang einer Längsachse der Vorrichtung einführbar ist. Die Vorrichtung weist weiterhin eine Folienklemmung auf, deren mindestens zwei Folienmesser an verschiedenen Seiten der Längsachse angeordnet sind. Die Folienklemmung kann auch als Folienschneideinheit bezeichnet werden. Der in einem vorhergehenden Schritt abgemantelte Endabschnitt des Datenkabels, dessen Schirmfolie freiliegt, ist entlang der Längsachse zwischen den Folienmessern, die in einer Durchlassstellung sind, in die Leitungsklemmung einführbar. Die Leitungsklemmung und die Folienklemmung sind beide über ein gemeinsames Schwenksystem an einen ortsfesten Rahmen der Vorrichtung gekoppelt. Über das Schwenksystem sind die Leitungsklemmung und die Folienklemmung gemeinsam und gleichzeitig um die Längsachse drehbar. Die Vorrichtung ermöglicht also, den abgemantelten, ggf. von dem Schirmgeflecht befreiten Endabschnitt eines zwei- oder mehradrigen, insbesondere eines zweiadrigen Datenkabels sowohl zu entdrillen als auch die Schirmfolie zu entfernen. Bei dieser Vorrichtung erfolgen alle translatorischen Aktionen wie z.B. das Abziehen der Schirmfolie und alle rotatorischen Aktionen wie z.B. das entdrillen der Adern beider Teilprozesse entlang der bzw. um die genau eine Längsachse. Damit können in einer einzigen Vorrichtung (Bearbeitungsstation) beide Teilprozesse mit einer erhöhten Verdichtung bzw. Integration durchgeführt werden, und es wird Prozesszeit (Taktzeit) gespart. Insbesondere wird bei dem Einführen des abgemantelten Endabschnitts des Datenkabels in die Vorrichtung dieser Endabschnitt entdrillt und bei dem Herausführen des entdrillten Endabschnitts die Schirmfolie entfernt.

Der radiale Abstand der Haltebacken in der Einführstellung, der erforderlich ist, um den Endabschnitt sicher einführen zu können, lässt sich reduzieren, wobei die Haltebacken in der Einführstellung eine Einlassöffnung für den Endabschnitt bilden, die die Form eines Kegelstumpfes oder eines Trichters aufweist, und/oder wenn die Haltebacken Einführschrägen aufweisen.

Die beiden Folienmesser können benachbart zur Einlassöffnung bzw. zu den Einführschrägen sein und müssen dann in ihrer Durchlassstellung entsprechend weit geöffnet sein.

Bei einer besonders bevorzugten Ausgestaltung der Vorrichtung sind die Haltebacken (abgesehen von ihrer Einführstellung) radial zur Längsachse hin (auch) in eine Einschubstellung bewegbar (verstellbar). Dabei ist ein Abstand der Haltebacken in der Einschubstellung kleiner als in der Einführstellung. Die Folienmesser sind (abgesehen von ihrer Durchlassstellung) radial zur Längsachse hin (auch) in eine Klemmstellung bewegbar (verstellbar), wobei ein Abstand der Folienmesser zur Längsachse in der Klemmstellung kleiner als in der Durchlassstellung ist. Mit den zwei Stellungen der Haltebacken sind ein Einführen nur eines Teils des Endabschnitts und dann eine zweistufige Entdrillung möglich. Genauer gesagt wird zunächst nur der erste Teil des Endabschnitts entdrillt, und danach ist eine komplette Entdrillung möglich. Abschließend kann das Abziehen der Schirmfolie erfolgen.

Beide genannte Stufen der Entdrillung sind deutlich vereinfacht, wenn die Haltebacken zumindest in der Einschubstellung einen entlang der Längsachse gerichteten Kanal für den Endabschnitt bilden, dessen Querschnitt an die Adern des Datenkabels angepasst ist.

Wenn die Haltebacken in der Einschubstellung einen ovalen Kanal bilden, ist die Vorrichtung passend für ein Datenkabel mit zwei freigelegten Adern.

Vorzugsweise weisen die jeweiligen Schneiden der Folienmesser eine an den Querschnitt des Datenkabels angepasste Form mit jeweils mindestens einem Zahn für einen jeweiligen Bereich zwischen zwei Adern auf. Im Fall von zwei Adern und zwei Messern weist jedes Messer genau einen Zahn auf. Im Falle von drei Adern in einer Dreieckanordnung sind drei Messer möglich, die jeweils einen Zahn aufweisen, so dass zwei benachbarte Adern durch jeweils einen Zahn getrennt sind. Es sind aber auch zwei Messer möglich, wobei ein Messer einen Zahn und ein Messer zwei Zähne aufweist.

Vorzugsweise entspricht die Anzahl der Haltebacken derjenigen der Folienmesser. Dann können die Folienmesser jeweils an eine Haltebacke gekoppelt und/oder jeweils in einer Haltebacke geführt sein.

Bei einer bevorzugten Ausgestaltung der Vorrichtung für die Bearbeitung von den Endabschnitten von zweiadrigen Datenkabeln sind zwei Haltebacken vorgesehen, die direkt und radial aufeinander zu bewegbar sind, wobei eine größere Haltebacke eine größeren Teil des Umfangs des Kanals bildet, als die zweite kleinere Haltebacke. Weiterhin sind auch zwei Folienmesser vorgesehen, die direkt und radial aufeinander zu bewegbar sind, wobei ein größeres Folienmesser einen größeren Teil des Umfangs der Adern umfasst, als das zweite kleinere Folienmesser.

Vorzugsweise ist eine Ausblasvorrichtung vorgesehen, deren Fluidstrahl, vorzugsweise Luftstrahl, zwischen die beiden Haltebacken entlang der Längsachse in Richtung zu den Folienmessern gerichtet ist. Damit werden das Einführen und die Bearbeitung des nächsten Endabschnitts erleichtert.

Eine Auslassöffnung der Ausblasvorrichtung ist vorzugsweise in dem Bereich zwischen den beiden Haltebacken angeordnet. Dann werden auch bei mäßigen Luftdruck alle Schirmfolienreste und evtl. andere Verschmutzungen sicher weggeblasen.

Vorzugsweise ist (auch) die Ausblasvorrichtung oder ihre Auslassöffnung über das gemeinsame Schwenksystem an den ortsfesten Rahmen gekoppelt und um die Längsachse drehbar.

Das Verfahren gemäß der Offenbarung dient zur Bearbeitung eines Endabschnitts eines Datenkabels mit mindestens zwei Adern. Das Verfahren ist vorzugsweise unter Verwendung der vorbeschriebenen Vorrichtung durchführbar. Das Verfahren weist folgende Schritte 1 bis 6 auf, die in der genannten Reihenfolgen durchgeführt werden:
1. Freilegen (Abmanteln, ggf. Schirmgeflecht umlegen) des Endabschnitts bis zu einer Wurzel und Stellen der Haltebacken der Leitungsklemmung der Vorrichtung in deren Einführstellung und der Folienmesser der Folienklemmung der Vorrichtung in deren Durchlassstellung;
2. Durchführen zwischen den Folienmessern hindurch und Einführen eines Teils (z.B. 40-60%) des Endabschnitts zwischen die Haltebacken;
3. Zusammenfahren der Haltebacken von der Einführstellung in die Einschubstellung mit gleichzeitigem Entdrillen des Teils (Stufe 1 der Entdrillung);
4. Entdrillen des gesamten Endabschnitts durch weiteres (gänzliches) Einführen des Endabschnitts zwischen den Folienmessern hindurch zwischen die Haltebacken (bis zur Wurzel) bei gleichzeitigem Drehen der Leitungsklemmung und der Folienklemmung um die Längsachse in Entdrillrichtung mittels dem Schwenksystem (Stufe 2 der Entdrillung);
5. Zusammenfahren der Folienmesser von der Durchlassstellung in die Klemmstellung; und
6. Abziehen der Schirmfolie durch Herausziehen des Endabschnitts aus der Leitungsklemmung durch die Folienklemmung hindurch.

Mit diesem Verfahren erfolgen alle translatorischen Schritte wie z.B. das Abziehen der Schirmfolie und alle rotatorischen Schritte wie z.B. das Entdrillen der Adern beider Teilprozesse entlang der bzw. um die genau eine Längsachse. Damit können beide Teilprozesse mit einer erhöhten Verdichtung bzw. Integration in einer einzigen Bearbeitungsstation durchgeführt werden, und es wird Prozesszeit (Taktzeit) gespart.

Bei dem Herausziehen des Endabschnitts verbleiben die Haltebacken in der Einschubstellung (oben, Schritt 5. und 6.), so dass die Haltebacken nur zwischen zwei Stellungen, der Einführstellung und der Einschubstellung, verstellt werden, so dass sich die Ansteuerung der Haltebacken vereinfacht. Die Einschubstellung entspricht dabei einer Endstellung, in der sowohl das Entdrillen als auch das Entfernen der Schirmfolie erfolgt.

Bei dem Schritt 6 erfolgt das Abziehen der Schirmfolie insbesondere durch ein Auftrennen, ein Einschneiden oder Ritzen der Schirmfolie durch die Folienmesser.

Vor Schritt 1 kann die Schirmfolie an der Wurzel perforiert werden, damit sie dort leichter und definierter abreißt.

Um die Winkellage des Kanals der Leitungsklemmung (und die Winkellage der Folienklemmung) an diejenige des stirnseitigen Endes (der Adern) des Datenkabels anzupassen kann vor Schritt 2 ein Drehen der Leitungsklemmung und der Folienklemmung um die Längsachse in eine vorbestimmte Winkellage mittels dem Schwenksystem erfolgen. Die Winkellage kann auch als Einführdrehlage bezeichnet werden.

Die Winkellage wird vorzugsweise aus der (bekannten) Winkellage (der Adern) des Datenkabels an der Wurzel und aus der (bekannten) Verdrillung pro Länge und aus eine (bekannte) Länge des Endabschnitts berechnet. Die Länge des Endabschnitts kann auch als Abmantelllänge bezeichnet werden.

Nach Schritt 6 kann ein Ausblasen mittels der Ausblasvorrichtung erfolgen, damit das Einführen und die Konfektionierung des nächsten Endabschnitts erleichtert werden.

Weitere Vorteile und Merkmale der Erfindung ergeben sich aus den abhängigen Ansprüchen sowie aus der Beschreibung mindestens eines Ausführungsbeispiels.

Die Erfindung wird im Folgenden unter Bezugnahme auf die anliegenden Zeichnungen anhand eines Ausführungsbeispiels näher beschrieben und erläutert.

### Kurzbeschreibung der Figuren

- Fig. 1: zeigt eine Vorrichtung zur Kabelbearbeitung gemäß einem Ausführungsbeispiel der vorliegenden Offenbarung in einer perspektivischen Ansicht;
- Fig. 2: zeigt zwei Haltebacken der Vorrichtung aus Fig. 1 in einer perspektivischen Ansicht;
- Fig. 3: zeigt zwei Folienmesser der Vorrichtung aus Fig. 1 in einer perspektivischen Ansicht;
- Fig. 4: zeigt die Vorrichtung aus Fig. 1 in einer perspektivischen Vorderansicht; und
- Fig. 5: zeigt ein Flussdiagramm bei einer beispielhaften Durchführung des erfindungsgemäßen Verfahrens.

### Beschreibung der Ausführungsbeispiele

Nachstehend werden ein Ausführungsbeispiel der Vorrichtung und ein Ausführungsbeispiel des Verfahrens der vorliegenden Offenbarung auf der Basis der zugehörigen Figuren beschrieben.

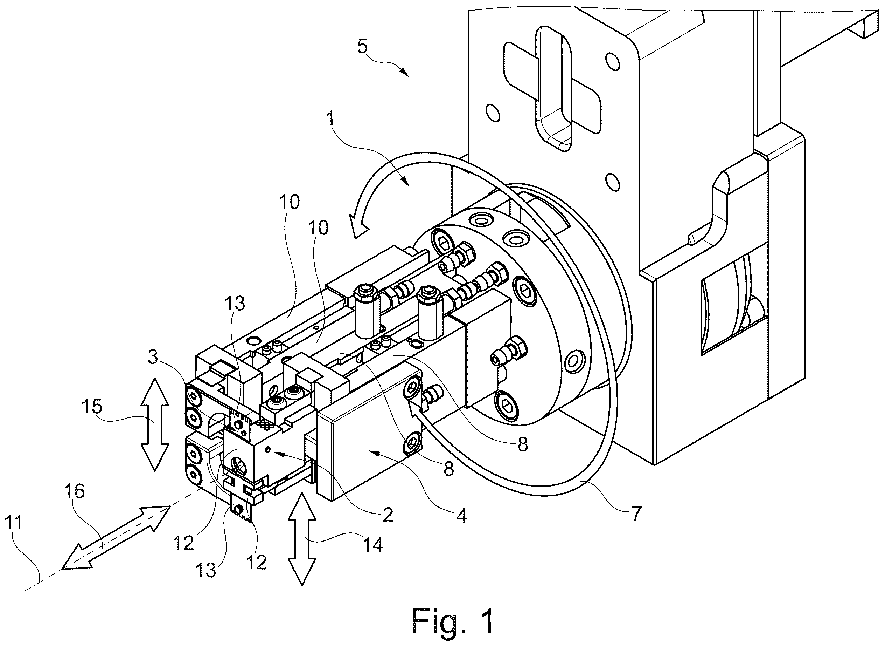

Fig. 1 zeigt ein eine Vorrichtung zur Kabelbearbeitung gemäß dem Ausführungsbeispiel der vorliegenden Offenbarung. Sie hat einen ruhenden Rahmen 5 an den ein Schwenksystem 1 gekoppelt ist. Das Schwenksystem 1 hat einen etwa kreiszylindrischen Hauptkörper 6, an dem Längsträger 8, 10 befestigt sind. Zwei Längsträger 8 tragen an dem vom Hauptkörper 6 beabstandeten Endabschnitt eine Leitungsklemmung 2 während zwei Längsträger 10 vom Hauptkörper 6 beabstandeten Endabschnitt eine Folienklemmung 3 tragen.

Die Leitungsklemmung 2 hat zwei Haltebacken 12, die senkrecht zueinander gemäß dem Doppelpfeil 14 aufeinander zu und voneinander weg bewegbar sind.

Die Folienklemmung 3 hat zwei Folienmesser 13, die senkrecht zueinander gemäß dem Doppelpfeil 15 aufeinander zu und voneinander weg bewegbar sind.

Weiterhin ist an eine der beiden Längsträger 8, die die Leitungsklemmung 2 tragen, eine Ausblasvorrichtung 4 befestigt.

Das Schwenksystem 1, also der Hauptkörper 1 und die beiden Längsträger 8 mit der Leitungsklemmung 2 und die beiden Längsträger 10 mit der Folienklemmung 3 und der Ausblasvorrichtung 4 sind als Einheit um eine Längsachse 11 der Vorrichtung gemäß dem Doppelpfeil 7 drehbar. Entlang der Längsachse 11 ist auch gemäß dem Doppelpfeil 16 ein abgemantelter Endabschnitt eines zweiadrigen Datenkabels in die Vorrichtung einführbar, genauer gesagt zwischen den Folienmessern 13 (hin)durchführbar und zwischen die Haltebacken 12 einführbar. "Abgemantelt" bedeutet, dass ein Kunststoffmantel entfernt ist, und dass ein gegebenenfalls vorhandenes Schirmgeflecht zumindest zurückgebogen ist, so dass die beiden Adern mit ihrer die beiden Adern umgebenden Schirmfolie freiliegen.

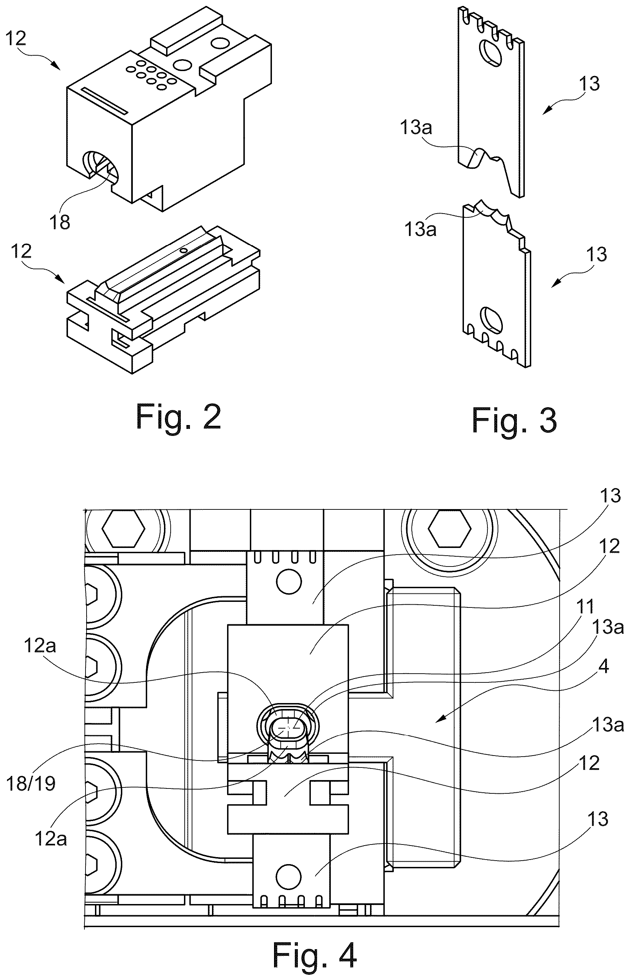

Fig. 2 zeigt die beiden Haltebacken 12 der Leitungsklemmung 2 aus Fig. 1 in einer Explosionszeichnung, in der ihr radialer Abstand zueinander bzw. zur Längsachse 11 (vgl. Fig. 1) größer ist, als im Betrieb der Leitungsklemmung 2. Im Betrieb der Leitungsklemmung 2 werden zwei verschieden Abstände der beiden Haltebacken 12 zueinander eingestellt. Der größte Abstand der beiden Haltebacken 12 wird als Einführstellung, ein demgegenüber verminderter Abstand wird als Einschubstellung bezeichnet. In der Einschubstellung umfassen die beiden Haltebacken 12 den abgemantelten Endabschnitt ähnlich einer Spielpassung, so dass der Endabschnitt eingeschoben und rotatorisch mitgenommen werden kann In der Einführstellung der Haltebacken 12 wird der abgemantelte Endabschnitt des Kabels um ca. 50% seiner Länge zwischen die Haltebacken 12 eingeführt, dann die Haltebacken von der Einführstellung in die Einschubstellung verbracht (der Abschnitt der Haltebacken 12 also verringert), nachfolgend der abgemantelte Endabschnitt des Kabels vollständig zwischen die Haltebacken 12 eingeführt, wobei das Schwenksystem oszillierende Drehbewegungen (Doppelpfeil 7) ausführt. Während des Herausziehens werden die oszillierenden Drehbewegungen fortgesetzt, dabei schließen die Folienmesser 13, so dass die Schirmfolie aufgetrennt wird und entfernt werden kann. Dieser Ablauf wird im Folgenden näher erläutert. Während des Herausziehens des Endabschnitts des Kabels aus den in Einschubstellung befindlichen Haltebacken hat die Folie ein Spiel zu den Haltebacken 12, um die oszillierende Drehbewegung zu erleichtern.

Es ist zu erkennen, dass die in Fig. 2 untere Haltebacken 12 weniger als 50 % eines ovalen Kanals 18 für den abgemantelten Endabschnitt definiert. Dementsprechend definiert die in Figur 2 obere Haltebacken 12 mehr als 50 % des Umfangs des ovalen Kanals 18 für den abgemantelten Endabschnitt.

Fig. 3 zeigt die beiden Folienmesser 13 der Folienklemmung 3 aus Fig. 1, wobei der Abstand etwa demjenigen der Durchlassstellung entspricht. Im Betrieb der betroffenen Folienklemmung 3 kann noch eine Klemmstellung eingenommen werden, in dem die gezeigten Schneiden 13a die Schirmfolie klemmen oder sogar schneiden.

Es ist zu erkennen, dass das in Fig. 3 untere Folienmesser 13 weniger Umfang einer Einlassöffnung bzw. eines Kanals 18 für den abgemantelten Endabschnitt definiert, als das obere Folienmesser 13.

Fig. 4 zeigt die Vorrichtung aus Figur 1 in einer Ansicht entlang der Längsachse 11. Dabei sind die beiden Haltebacken 12 in ihrer Einschubstellung gezeigt, in der sie die Schirmfolie mit Spiel aufnehmen können, während die beiden Folienmesser 13 in ihrer Durchlassstellung gezeigt sind. In diesem Zustand definieren die beiden Haltebacken 12 den ovalen Querschnitt des Kanals 18 der mindestens die Länge des Endabschnitts aufweist.

In der Flucht des Kanals 18 ist eine Auslassöffnung 19 der Ausblasvorrichtung 4 angeordnet.

Beide Folienmesser 13 sind abschnittsweise jeweils in einer der Haltebacken 12 bzw. genauer gesagt in deren jeweiligen Hauptkörpern radial zur Längsachse 11 geführt. Die Schneide 13a des in Figur 4 oberen größeren Folienmessers 13 ist in der gezeigten Durchlassstellung des Folienmessers 13 bei gleichzeitiger Einschubstellung (Abziehstellung) der Haltebacke 12 weitgehend in die Führung eingezogen.

In Fig. 4 ist zu erkennen, dass die Schneide 13a der unteren kleineren Folienmessers 13 drei Zähne hat, wobei der mittlere Zahn dazu dient, in einem Freiraum zwischen den beiden Adern einzudringen und dabei die Schirmfolie zu durchstechen. Das obere größere Folienmesser 13 hat einen (nicht gezeigten) ebensolchen Zahn für den gleichen Zweck.

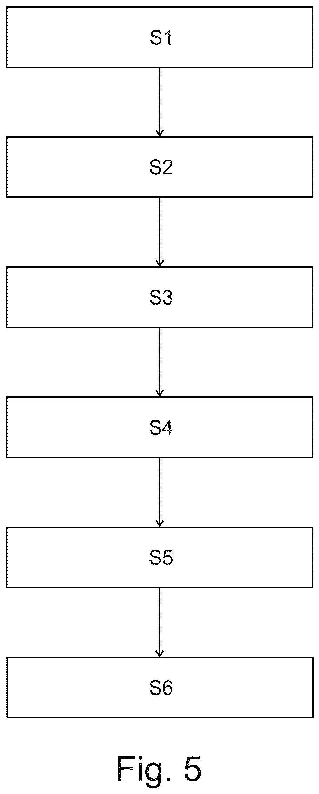

Fig. 5 zeigt ein Ausführungsbeispiel des Verfahrens, das mit der Vorrichtung gemäß den Figuren 1 bis 4 durchgeführt wird. Das Verfahren weist grundsätzlich gemäß der Offenbarung folgende Schritte S1 bis S6 auf, die in der genannten Reihenfolge durchgeführt werden:
S1: Freilegen (Abmanteln, ggf. Schirmgeflecht umlegen) des Endabschnitts bis zu einer Wurzel und Stellen der Haltebacken 12 der Leitungsklemmung 2 der Vorrichtung in deren Einführstellung und der Folienmesser 13 der Folienklemmung 2 der Vorrichtung in deren Durchlassstellung;
S2: Durchführen zwischen den Folienmessern 13 hindurch und Einführen eines Teils (z.B. 40-60%) des Endabschnitts zwischen die Haltebacken 12;
S3: Zusammenfahren der Haltebacken 12 von der Einführstellung in die Einschubstellung mit gleichzeitigem Entdrillen des Teils (Stufe 1 der Entdrillung);
S4: Entdrillen des gesamten Endabschnitts durch weiteres (gänzliches) Einführen des Endabschnitts zwischen den Folienmessern 13 hindurch zwischen die Haltebacken 12 (bis zur Wurzel) bei gleichzeitigem Drehen der Leitungsklemmung 2 und der Folienklemmung 3 um die Längsachse 11 in Entdrillrichtung mittels dem Schwenksystem (Stufe 2 der Entdrillung);
S5: Zusammenfahren der Folienmesser 13 von der Durchlassstellung in die Klemmstellung; und
S6: Abziehen der Schirmfolie durch Herausziehen des Endabschnitts aus der Leitungsklemmung 2 durch die Folienklemmung 3 hindurch, wobei insbesondere die Folienmesser 13 die Schirmfolie einschneiden, beispielsweise ritzen oder auftrennen.

Bei einem konkreteren Ausführungsbeispiel des Verfahrens wird das Datenkabel endseitig abgemantelt, das Schirmgeflecht ggf. beseitigt S1. Dabei ist an der Abmantel-Kante, an der ggf. das Schirmgeflecht umgelegt wurde, die sog. Wurzel freigelegt, ab der das Adernpaar nur noch durch die Schirmfolie bedeckt sind. An der Wurzel kann die Schirmfolie eine Schwächung (Perforierung) aufweisen, die das Entfernen der Schirmfolie erleichtert.

Die folgenden Schritte dienen dazu, das endseitig abgemantelte Kabelende bis zu der Wurzel hin zu entdrillen und gleichzeitig die Schirmfolie zu entfernen.

Die Winkellage der beiden Adern ist an der Wurzel bekannt und über eine definierte Abmantellänge, so berechenbar, dass abgeschätzt werden kann, welche Winkellage die beiden Adern in Bezug auf die (in Fig. 4 gezeigte) Einlassöffnung der Leitungsklemmung 2 haben.

Das Schwenksystem 1 wird so gedreht, dass die Einlassöffnung der Leitungsklemmung 2 ungefähr der abgeschätzten Winkellage der Enden der beiden Adern entspricht (Doppelpfeil 7 in Fig. 1).

Das noch von der Schirmfolie bedeckte Adernpaar wird um einen gewissen Betrag (ca. der Hälfte des Abstandes der Wurzel zu den Enden der Adern, also ca. der Hälfte der Abmantel-Länge) zwischen die noch offenen Haltebacken 12 der Leitungsklemmung 2 eingeführt S2.

In dieser Zwischenposition des halb eingeführten Adernpaares innerhalb der Leitungsklemmung 2 wird die Leitungsklemmung 2 betätigt, so dass die beiden Haltebacken 12 aufeinander zu in die Einschubstellung bewegt werden und ein Druck auf das Adernpaar ausgeübt wird. Dieser Druck sorgt für eine parallele Ausrichtung des Adernpaares zwischen den beiden Haltebacken 12 der Leitungsklemmung 2 (Stufe 1 der Entdrillung) S3.

Das Adernpaar wird anschließend bis zum Ende in die Leitungsklemmung 2 eingeführt, deren Haltebacken 12 aneinander gedrückt in der Einschubstellung gehalten werden. dabei wird das Schwenksystem 1 so betätigt, dass dieses in Entdrillrichtung des Adernpaares wirkt (Stufe 2 der Entdrillung) S4. Das Einführen des Adernpaars entlang der Längsachse 11 wird einer Endstellung angehalten, wenn die Wurzel der Adern an der Einlassöffnung der beiden Haltebacken 12 der Leitungsklemmung 2 angeordnet ist.

In der Endstellung wird die Folienklemmung 3 betätigt, so dass die beiden Folienmesser 13 mit ihren als Klemmkontur dienenden Klingen 13a auf das geklemmt gehaltene Adernpaar in die Klemmstellung bewegt werden S5.

Ausgehend von der Endstellung wird das Adernpaar entgegen der Einführrichtung aus dem Bereich zwischen den beiden aneinander gedrückt gehaltenen Haltebacken 12 der Leitungsklemmung 2 zurückgefahren (zurückgezogen), dabei wird die Schirmfolie zwischen den beiden Klingen 13a abgeschert und teilweise zwischen den beiden Haltebacken 12 der Leitungsklemmung 2 gehalten, jedenfalls vom Adernpaar entfernt S6. Bei dem Herausführen (Herausziehen) des Adernpaares zwischen den beiden geklemmt gehaltenen Haltebacken 12 der Leitungsklemmung 2 führt das Schwenksystem 1 eine oszillierende Bewegung um die Schwenkachse 11 aus, was das Ablösen der Schirmfolie vom Adernpaar unterstützt.

Abschließend werden die beiden Haltebacken der Leitungsklemmung 2 voneinander weg in die Einführstellung bewegt, so dass, ggf. nach einer Verschwenkung des Schwenksystems 1 zu Korrektur der Ausrichtung der Winkellage, ein neues Adernpaar eingeführt werden kann. Abschließend werden weiter die Folienmesser 13 der Folienklemmung 3 in die Durchlassstellung bewegt, so dass die Klingen 13a einem Einführen des neuen Adernpaares nicht mehr in Wege stehen.

Folienreste, die sich zwischen den beiden Haltebacken 12 der Leitungsklemmung 2 ansammeln, werden durch eine Druckluft mittels des Ausblassystems 4 regelmäßig entfernt.

Die Bewegung des Adernpaares gemäß dem Doppelpfeil 16 aus Figur 1 erfolgt durch einen (nicht gezeigten) Leitungsspanner in die Leitungsklemmung 2 hinein bzw. aus der Leitungsklemmung 2 hinaus entlang der Langsachse 11.

### Bezugszeichenliste

- 1: Schwenksystem
- 2: Leitungsklemmung
- 3: Folienklemmung
- 4: Ausblasvorrichtung
- 5: Rahmen
- 6: Hauptkörper
- 7: Doppelpfeil (Rotation des Schwenksystems)
- 8: Längsträger der Leitungsklemmung
- 10: Längsträger der Folienklemmung
- 11: Längsachse
- 12: Haltebacke
- 12a: Einführschräge
- 13: Folienmesser
- 13a: Schneide
- 14: Doppelpfeil (Schließrichtung und Öffnungsrichtung der Haltebacken)
- 15: Doppelpfeil (Schließrichtung und Öffnungsrichtung der Folienmesser)
- 16: Doppelpfeil (Einführrichtung und Auszugsrichtung des Endabschnitts)
- 18: Kanals
- 19: Ausblasöffnung

- S1: Schritt 1
- S2: Schritt 2
- S3: Schritt 3
- S4: Schritt 4
- S5: Schritt 5
- S6: Schritt 6

## Patentansprüche

1. Vorrichtung zur Schirmfolienentfernung und zur Entdrillung mehrerer Adern eines Endabschnitts eines Datenkabels, wobei die Vorrichtung eine Leitungsklemmung (2) aufweist, zwischen deren mindestens zwei in eine Einführstellung gestellte Haltebacken (12) der Endabschnitt entlang einer Längsachse (11) einführbar ist, und wobei eine Folienklemmung (3) vorgesehen ist, deren mindestens zwei Folienmesser (13) an verschiedenen Seiten der Längsachse (11) angeordnet sind, wobei zwischen den in eine Durchlassstellung gestellten Folienmessern (13) hindurch der Endabschnitt entlang der Längsachse (11) in die Leitungsklemmung (2) einführbar ist, und wobei die Leitungsklemmung (2) und die Folienklemmung (3) über ein gemeinsames Schwenksystem (1) um die Längsachse (11) drehbar sind.

2. Vorrichtung nach Anspruch 1, wobei die Haltebacken (12) radial zur Längsachse (11) hin in eine Einschubstellung bewegbar sind, wobei ein Abstand der Haltebacken (12) zur Längsachse (11) in der Einschubstellung kleiner als in der Einführstellung ist, und wobei die Folienmesser (13) radial zur Längsachse (11) hin in eine Klemmstellung bewegbar sind, wobei ein Abstand der Folienmesser (13) zur Längsachse (11) in der Klemmstellung kleiner als in der Durchlassstellung ist.

3. Vorrichtung nach Anspruch 2, **dadurch gekennzeichnet, dass** die Haltebacken (12) zumindest in der Einschubstellung einen entlang der Längsachse (11) gerichteten zylindrischen Kanal (18) für den Endabschnitt bilden, dessen Querschnitt an die Adern angepasst ist.

4. Vorrichtung nach Anspruch 3, **dadurch gekennzeichnet, dass** der Kanal (18) einen ovalen Querschnitt aufweist.

5. Vorrichtung nach einem der vorhergehenden Ansprüche, **dadurch gekennzeichnet, dass** jeweilige Schneiden (13a) der Folienmesser (13) eine an einen Querschnitt des Datenkabels angepasste Form und jeweils mindestens einen Zahn aufweisen.

6. Vorrichtung nach einem der vorhergehenden Ansprüche, **dadurch gekennzeichnet, dass** die Anzahl der Haltebacken (12) derjenigen der Folienmesser (13) entspricht.

7. Vorrichtung nach Anspruch 6, **dadurch gekennzeichnet, dass** die Folienmesser (13) jeweils an eine Haltebacke (12) gekoppelt und/oder jeweils in einer Haltebacke (12) geführt sind.

8. Vorrichtung nach Anspruch 3 oder 4 und nach Anspruch 7, **dadurch gekennzeichnet, dass** zwei Haltebacken (12) vorgesehen sind, die direkt und radial aufeinander zu bewegbar sind, wobei eine größere Haltebacke (12) eine größeren Teil des Umfangs des Kanals (18) bildet, als die zweite kleinere Haltebacke (12), und dass zwei Folienmesser (13) vorgesehen sind, die direkt und radial aufeinander zu bewegbar sind, wobei ein größeres Folienmesser (13) eine größere Schneide (13a) hat als ein kleineres Folienmesser (13).

9. Vorrichtung nach einem der vorhergehenden Ansprüche, **gekennzeichnet durch** eine Ausblasvorrichtung (4), deren Fluidstrahl zwischen die beiden Haltebacken (12) entlang der Längsachse (11) in Richtung zu den Folienmessern (13) gerichtet ist.

10. Vorrichtung nach Anspruch 9, **dadurch gekennzeichnet, dass** die Ausblasvorrichtung (4) über das gemeinsame Schwenksystem (1) um die Längsachse (11) drehbar ist.

11. Verfahren zur Bearbeitung eines Endabschnitts eines Datenkabels vorzugsweise mit einer Vorrichtung nach Anspruch 2, **gekennzeichnet durch** die Schritte (S1 bis S6)
(S1) Freilegen der von einer Schirmfolie umhüllten Adern des Endabschnitts bis zu einer Wurzel und Stellen der Haltebacken (12) der Leitungsklemmung (2) in die Einführstellung und der Folienmesser (13) der Folienklemmung (3) in die Durchlassstellung;
(S2) Durchführen eines Teils des Endabschnitts zwischen den Folienmessern (13) hindurch und Einführen des Teils des Endabschnitts zwischen die Haltebacken (12);
(S3) Entdrillen des Teils des Endabschnitts durch Zusammenfahren der Haltebacken (12) von der Einführstellung in die Einschubstellung;
(S4) weiteres gänzliches Einführen des Endabschnitts zwischen den Folienmessern (13) hindurch zwischen die Haltebacken (12) bei gleichzeitigem Drehen der Leitungsklemmung (2) und der Folienklemmung (3) um die Längsachse (11) in Entdrillrichtung mittels dem Schwenksystem (1);
(S5) Zusammenfahren der Folienmesser (13) von der Durchlassstellung in die Klemmstellung; und
(S6) Abziehen der Schirmfolie durch Herausziehen des Endabschnitts aus der Leitungsklemmung (2) durch die Folienklemmung (3) hindurch.

12. Verfahren nach Anspruch 11, **dadurch gekennzeichnet, dass** vor Schritt 2 (S2) durch Drehen des Schwenksystems (1) eine Winkellage der Leitungsklemmung (2) und der Folienklemmung (3) an eine Winkellage des stirnseitigen Endes der Adern angepasst werden.

13. Verfahren nach Anspruch 12, **dadurch gekennzeichnet, dass** die Winkellage des stirnseitigen Endes der Adern aus der Winkellage der Adern an der Wurzel und aus der Verdrillung pro Länge, und aus einer Länge des Endabschnitts berechnet wird.
